(19) Europäisches Patentamt
European Patent Office
Office européen des brevets

(11) **EP 3 059 663 B1**

(12) **EUROPEAN PATENT SPECIFICATION**

(45) Date of publication and mention of the grant of the patent:
**05.09.2018 Bulletin 2018/36**

(51) Int Cl.:
***G06F 3/01*** *(2006.01)*   ***G06K 9/00*** *(2006.01)*

(21) Application number: **16156954.6**

(22) Date of filing: **23.02.2016**

(54) **A METHOD AND A SYSTEM FOR INTERACTING WITH VIRTUAL OBJECTS IN A THREE-DIMENSIONAL SPACE**

VERFAHREN UND SYSTEM ZUR INTERAKTION MIT VIRTUELLEN OBJEKTEN IN EINEM DREIDIMENSIONALEN RAUM

PROCÉDÉ ET SYSTÈME PERMETTANT D'INTERAGIR AVEC DES OBJETS VIRTUELS DANS UN ESPACE TRIDIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2015 PL 41133815**

(43) Date of publication of application:
**24.08.2016 Bulletin 2016/34**

(73) Proprietor: **Samsung Electronics Polska Sp. z o.o. 02-674 Warszawa (PL)**

(72) Inventors:
- **Chmielewski, Radoslaw Pawel 93-509 Lodz (PL)**
- **Podkowka, Blazej 91-162 Lodz (PL)**

(74) Representative: **Kancelaria Eupatent.pl Sp. z.o.o Ul. Kilinskiego 185 90-348 Lodz (PL)**

(56) References cited:
WO-A1-2013/025011   WO-A2-2014/009561
US-A1- 2010 034 457   US-A1- 2012 326 995
US-A1- 2013 293 679

**Description**

TECHNICAL FIELD

The present invention relates to a method for interacting with virtual objects in a tree-dimensional space and a system for interacting with virtual objects in a three-dimensional space.

BACKGROUND

The present invention relates to touchless creation and modelling of simple solids by gestures performed by a user. A distinguishing feature of this system is an associated process of specific extraction and segmentation of data, tracking of head motion, detecting of gestures and a method for interacting with virtual objects.

US 2013/293679 A1, US 2012/326995 A1, WO 2014/009561 A2, US 2010/034457 A1, WO 2013/025011 A1 are examples of the prior art.

Although there are known various methods for creating and modelling of objects using gestures, there is a need to further improve these methods in order to provide a method and a system which will be comfortable for a user and allow a simple and intuitive interaction.

SUMMARY

The object of the invention is a method and a system for interacting with virtual objects in a three-dimensional space by gestures according to the appended claims.

BRIEF DESCRIPTION OF FIGURES

The present invention is presented by means of example embodiment in a drawing, in which:

Fig. 1 presents a general schematic of a system according to the present invention.
Fig. 2 presents an example of a work environment configured to operate with the system.
Fig. 3 presents a schematic of user's gestures detection.
Fig. 4A-4C present examples of depth maps.
Fig. 5 presents a flowchart a method for transformation of coefficients.
Fig. 6 presents a schematic of detecting hand gestures.
Fig. 7A-7F present examples of visualisation of virtual objects on a screen in response to user's hand gestures and head displacement.

DETAILED DESCRIPTION

The solution according to the invention may be applied in peripheral devices that can display images, for example on TV sets, projectors or virtual reality glasses.

The core elements of the present system are a processing unit for executing algorithms described herein, a display unit and a camera for extracting a depth map and having an embedded accelerometer for calculating the camera pitch with respect to the vector of gravity.

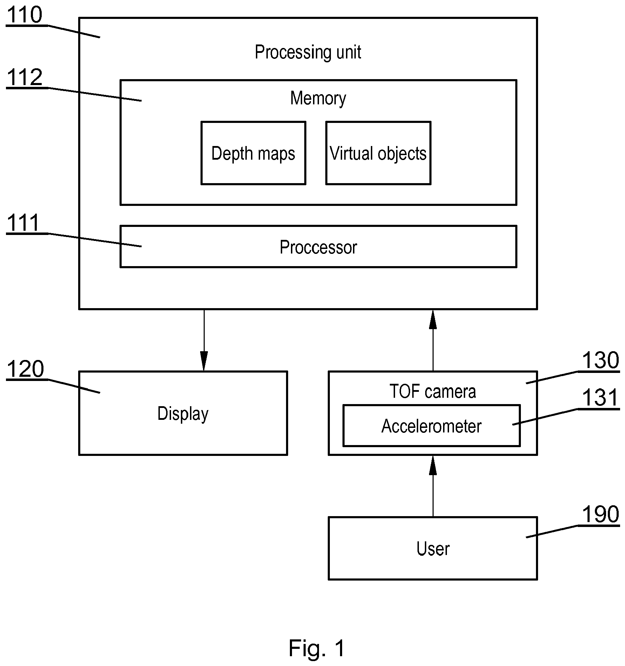

A schematic of the system according to the invention is presented in Fig. 1. The system comprises a processing unit 110 connected with an image display unit 120 and a camera 130 for measurement of depth. The camera 130 can be a TOF-type camera (Time of Flight), which determines a distance between its lens and an observed area and calculates the travel time of a light signal between the lens and every examined point of the observed area. Various known TOF cameras can be used, for example Kinect available from Microsoft or Senz3D available from Creative. The camera further comprises an accelerometer 131 for calculating the angle of inclination of the camera with respect to the vector of gravity. Other types of cameras can be used as well, for example LIDAR (Light Detection and Ranging) cameras, stereoscopic cameras or pattern projectors.

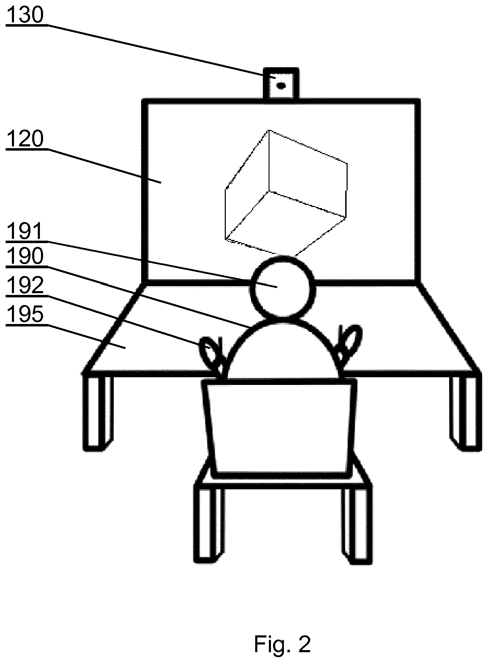

Fig. 2 presents an example of a work environment configured to operate with the system.. A user 190 sits at a desktop 195 (or another flat surface) with a display unit 120 for presenting objects. A camera 130 is installed above the display unit 120. The camera 130 is set so that it observes a predefined working surface of the desktop 195, as well as a head 191 and hands 192 of the user 190.

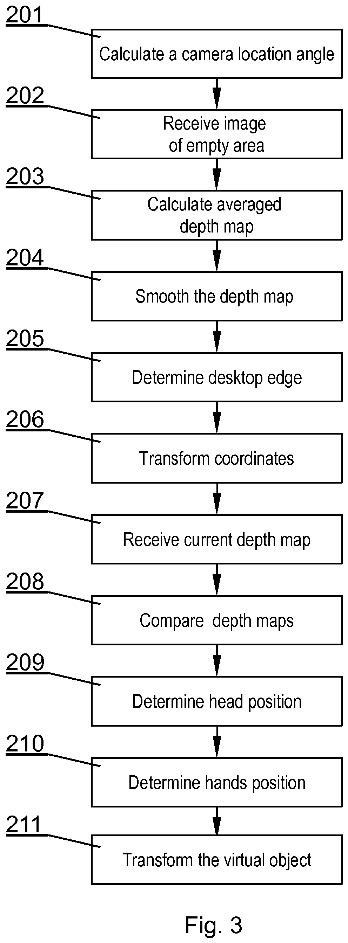

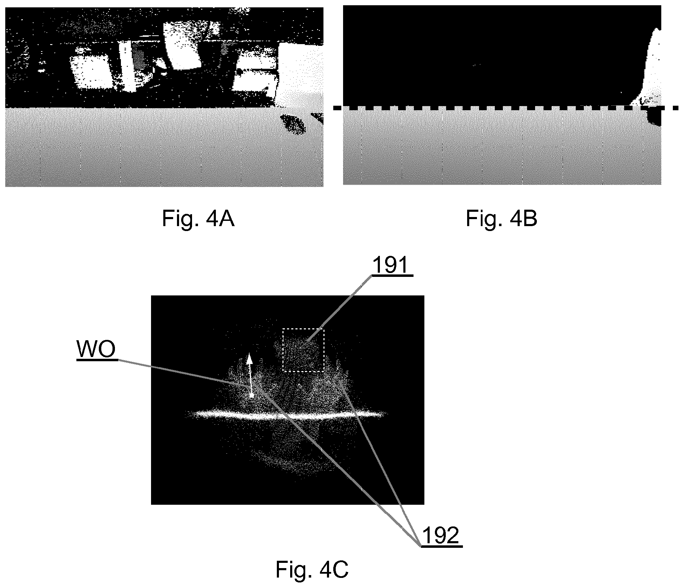

Fig. 3 presents a flowchart of a method for detecting user's gestures. In step 201, preferably for at least 10 successive measurements, an average deviation between a vertical axis of gravity and a vector of camera position as determined by the accelerometer 131 is calculated and it is stored in a memory 112 as a vector of camera displacement (Va) 130. Since this moment the camera should stand still. Subsequently in step 202, from the camera 130 there is acquired an image of the observed area for an empty area (i.e. an area without a user present) and a depth map for this image. The depth map may have a form of a bitmap having a resolution equal to the resolution of the image, wherein each depth map pixel determines a distance of a particular image point from the camera eye. An example of such depth map is presented in Fig. 4A. Subsequently, in step 203, an average depth value for each pixel is calculated as an average value for the recently received image and previously received images. The steps 202-203 are iterated n times, preferably at least 30 times, to receive average depth values for each pixel for at least 30 successive images, in order to eliminate possible noise and errors. The steps 202-203 may be therefore determined as a stage of initial system calibration. The result of steps 202-203 is an averaged depth map (ADM). In step 204, within the averaged depth map, there may be removed pixels having a distance from the camera higher than a predetermined value of visibility threshold, that is higher than a distance within which the user's hand is expected to be present to manipulate the system. As a result, a smoothed averaged depth map (SADM) is received, as shown for example in Fig. 4B. Subsequently, in step 205 an edge of the desktop is detected and its average depth value for multiple frames obtained is calculated. It may be accomplished by analysing the image in the region about half of its height and detecting an edge along which the depth values suddenly change their values. The edge of the desktop is marked in Fig. 4B by a dashed line.

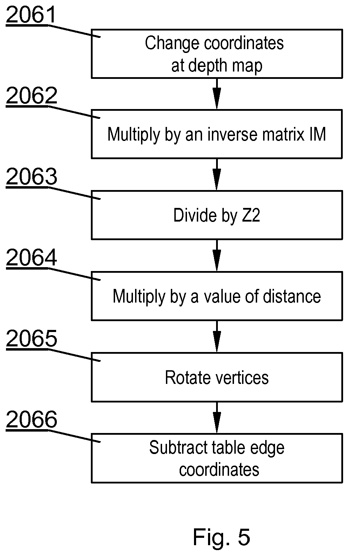

In the next step 206, coordinates of depth from the camera view are transformed to coordinates, for which the center of the coordinate system is the average point of the desktop edge that has been determined earlier, i.e. the center of the line determining the desktop edge according to the method described in details in Fig. 5. In step 2061, the coordinates on the depth map (indices of pixels in X and Y axes) are converted to a vector in a three-dimensional space with coordinates (X, Y, 0). Subsequently in step 2062 these vectors are multiplied by an inverse projection matrix (IPM) obtained from the data from of the camera technical specification on the basis of its vertical and horizontal viewing angles. Each point (a vector, a vertex) in a 3D space multiplied by the projection matrix (PM) is transformed to 2D screen coordinates using the equation:

$$IPM = MP^{-1}$$

The inversion of the projection matrix (PM) results in an inverse projection matrix (IPM) which enables inverse transformation that transforms the screen coordinates (X, Y, 0) to a vector in a 3D space (X, Y, Z) with unknown value of Z. However, the obtained vector will have its coordinates on the straight line that projects from the center of the camera. Therefore, by dividing all coordinates by a value Z and multiplying them by the depth value, a two-dimensional map with coordinates X, Y (in pixels) and the depth value for can be transformed to a cloud of points in the metric system. Therefore, a 3D vector with coordinates (X2, Y2, Z2) is obtained, wherein Z2 has unknown position. In step 2063, all coordinates are divided by the value of Z2, which results in a vector with coordinates (X2/Z2, Y2/Z2, Z2/Z2=1). Next, in step 2064, all coordinates are multiplied by a distance value from the depth map. In this manner, from the two-dimensional depth map there are obtained points having coordinates in the metric Cartesian system. In the next step 2065, vertices (i.e. vertices in a 3D space representing particular points of the depth map) are rotated by an angle between an averaged vector of the accelerometer 131 (Ax, Ay, Az) and a real vector of gravity having coordinates (0, -1, 0). This results in vertices having the Z coordinate directed perpendicular to the desktop, regardless of the initial orientation of the camera 130. All transformations are also executed for a point indicating the edge of the desktop. In the next step 2066, the coordinates of the transformed edge of the desktop are subtracted from coordinates values for each point. In this way, a cloud of points is obtained for each frame, having a central point of the coordinate system located directly in front of the user, i.e. the edge of the desktop. This data processing allows the system to easily locate points located on a desk or beyond the desktop.

Subsequently, in step 207 a next image is obtained from the camera, this time with a user present, wherein that image constitutes a current depth map (CDM). In step 208 the current depth map (CDM) is compared with the smoothed averaged depth map (SADM), for example by determining the differences between values of pixels to obtain a differential depth map (DDM), shown for example in Fig. 4C. Thus, data about new points in the image are obtained, for example about the user's head 191 and hands 192.

Further, in step 209 the user's head position is determined by determining a position of the highest point over the edge of the desktop in the area of about 30x50 centimetres (dimensions on the Z and X axes). After this point is determined, a search is performed in its area for points located about 20 centimetres below the highest point. The points (vectors) that are found are joined with each other and next divided by their quantity to receive an averaged user's head position.

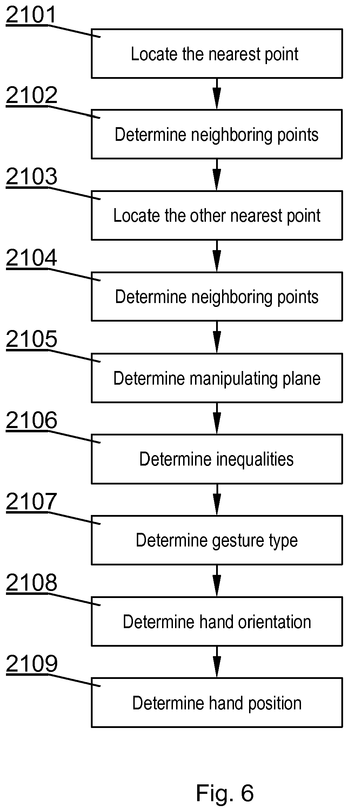

Subsequently, in step 210 a location of the user's hand 192 is determined by applying the algorithm shown in details in Fig. 6. In step 2101, the point that is nearest to the camera eye is determined, and in step 2102 its neighbouring points are determined which are appended to a list until all neighbouring points are appended - thus assuming that an assembled set of points comprising a hand and a forearm is located on the desk. This activity is repeated in step 2103 for a further point, not belonging to the earlier set, which is nearest to the camera - assuming that it is the second hand point. In step 2104 there are determined its neighboring points, which are appended to the list until all neighboring points will be appended - thereby, assuming that the assembled set of points comprises the second hand and the second forearm located on the desk. Next, in step 2105, for each list of received points a manipulating plane is determined and for this manipulating plane the centre of hand and a normal vector directed perpendicular to the middle of the palm are determined. The manipulating plane may be determined on the basis of known algorithms, for example the least squares approximation. Next, in step 2106 there are determined inequalities of the manipulating plane (MP), i.e. an average distance of all points from the plane. On this basis, it is possible to determine whether the hand performs a "grab" gesture (then, the average inequality, i.e. the average distance of all points from the manipulating plane MP is relatively large, i.e. larger than an upper threshold value of the gesture) or a flat hand (then, the average distance of all points from the manipulating plane MP is relatively small, i.e. smaller than a lower threshold value of the gesture). The gesture type is provided in step 2107. When the upper threshold value of the gesture is larger than the lower threshold value of the gesture, then the plane inequalities having a value between the lower threshold value and the upper threshold value do not allow to determine the type of the gesture and the user needs to straighten or bend the hand to a higher extent, in order to show the gesture in a more clear manner. In an alternative situation, when the upper threshold value of the gesture is equal to the lower threshold value of the gesture, the problem of vague gestures does not occur.

In step 2108 a hand orientation is determined, i.e. the angle of tilt of the hand with respect to the vertical axis. For this purpose, the centre of gravity of points included in the hand (i.e. the position of the middle of the palm) is determined, and the point furthest from the centre of gravity is searched for within the points where the distance to the pre-designated centre of gravity is the greatest, with the exception of the points whose "Z" coordinate (directed towards the camera) is smaller than the "Z" coordinate of the centre of gravity. Thus, the points which are nearer to the user are excluded. Subsequently, the centre of gravity is connected with the outermost point to obtain an orientation vector (OV) of the hand (shown for example in Fig. 4C). This allows determining the hand orientation also in situations when the hand is directed downwards, to the left or right side.

In step 2109 the hand position for the particular gesture is determined, in particular: the rotation of the hand for a grab gesture and/or the displacement of the hand for a flat hand gesture.

Based on the determined position (and/or its change with respect to a previous position) of the user's head 191 and hands 192 and the gesture type performed by the hands 192, in step 211 the virtual object is transformed correspondingly in the three-dimensional space.

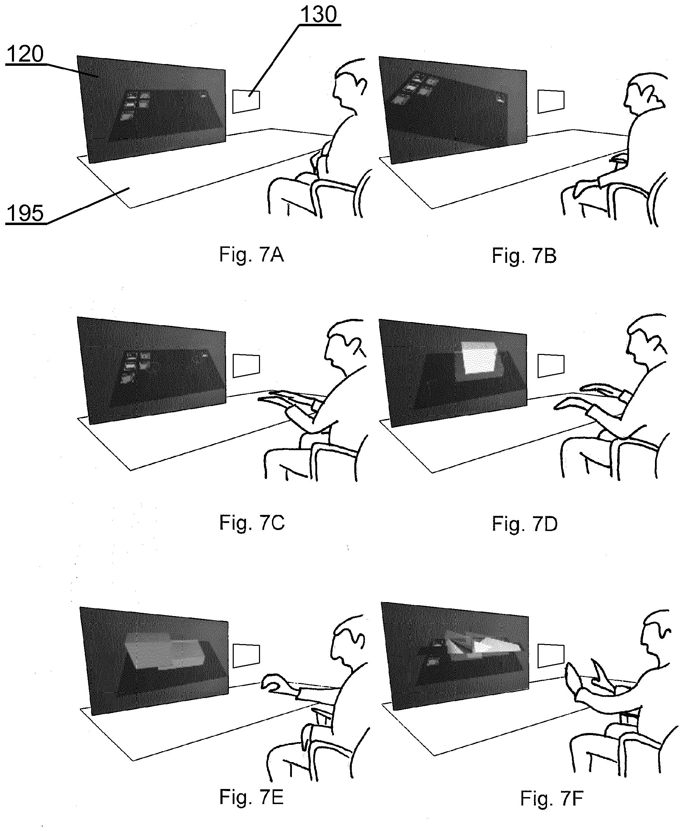

Virtual objects are presented on a screen as if they were located on the desktop 195, as shown in Fig. 7A. For example, a user's gesture may be interpreted as follows:

-    a head position may determine a point of view at the desktop - for example, a head displacement to the left side invokes a displacement of the point of view to a plane on the left, as shown in Fig. 7B;
-    a finger placement located nearest to a camera eye may be transformed into a cursor placement on a screen, wherein two cursors may be used, each cursor being manipulated by the finger mostly extended from each hand, as shown in Fig. 7C;
-    touching the desktop by the right hand may invoke a command to create a new solid figure, as shown in Fig. 7D;
-    a "grab" gesture may invoke a command of displacement of the solid which was last pointed by the cursor, as shown in Fig. 7E;
-    an "open hand" gesture may invoke a command to undo the previously issued command.

It can be easily recognized, by one skilled in the art, that the aforementioned method and system may be performed and/or controlled by one or more computer programs. Such computer programs are typically executed by utilizing the computing resources in a computing device, which can be incorporated in various devices, such as personal computers, personal digital assistants, cellular telephones, receivers and decoders of digital television, TVs, displays or the like. Applications are stored on a non-transitory medium. An example of a non-transitory medium is a non-volatile memory, for example a flash memory or volatile memory, for example RAM. The computer instructions are executed by data processing unit, such as a processor. These memories are exemplary recording media for storing computer programs comprising computer-executable instructions performing all the steps of the computer-implemented method according the technical concept presented herein.

**Claims**

1.    A method for interacting with virtual objects in a three-dimensional space by gestures, the method comprising:

- generating virtual objects in a processing unit (110) provided with a processor (111) and a memory (112);
- displaying the virtual objects on a display unit (120) connected to the processing unit,
- processing the image of the virtual objects in response to user's hand gestures and a user's head position received by a camera (130) for measuring depth and comprising an accelerometer (131) and connected to the processing unit (110) and directed to a scene in a real world, the scene comprising the head and hands of the user sitting at a desktop, and performing the following steps in the processing unit (110):
- receiving, from the camera (130), a signal representing a series of depth maps in a form of bitmaps for an empty area, calculating an averaged depth map (ADM) and storing the averaged depth map (ADM) in the memory (112);
- determining a location of an edge of the desktop (195) in the averaged depth map (ADM);
- transforming the depth coordinates from a camera view to a coordinate system having a center in the previously determined average point of the edge of the desktop (195);
- receiving a signal representing a current depth map (CDM) in a form of a bitmap;
- calculating a differential depth map (DDM) representing differences between the current depth map (CDM) and the averaged depth map (ADM);
- determining, in the differential depth map (DDM), a position of the user's head (191);
- determining, in the differential depth map (DDM) a position of at least one user's hand (192), wherein:

   ◦ selecting (2101), in the differential depth map (DDM), in the vicinity of the desktop (195) a pixel closest to the camera eye and pixels separated (2102) therefrom by a predetermined threshold range, and storing the selected pixels as a selected depth map (SDM);
   ◦ determining (2105) a manipulating plane corresponding to the selected pixels;
   ◦ determining (2106) a size of inequalities, as an average distance of all said pixels from said manipulating plane (MP) located between the points of the selected depth map (SDM);
   ◦ determining a type of the gesture (2107) performed as a grab gesture, when said size of inequalities of the manipulating plane is higher than a predetermined upper threshold value of the gesture or as a gesture of a flat hand when the size of inequalities of the manipulating plane is lower than a predetermined lower threshold value of the gesture;

   - and displaying on the display unit (120) a virtual object in a position determined by the current location of the user's head (191) and manipulating the virtual object in response to the gestures made by the user's hand (192).

2. The method according to claim 1, **characterised by** processing the averaged depth map (ADM) to a form of smoothed averaged depth map (SADM) by removing therefrom the pixels having a distance from the camera which is higher than a predetermined value of a threshold of visibility, and calculating a differential depth map (DDM) representing the difference between the current depth map (CDM) and the averaged depth map (ADM).

3. The method according to claim 1, **characterised by** invoking a command to displace a virtual object upon determining a grab gesture.

4. The method according to claim 1, **characterised by** invoking a command to undo a previously issued command upon determining a flat hand gesture.

5. The method according to claim 1, **characterised by** changing a point of view at the virtual objects displayed on the display unit (120) upon detecting a change of user's head position.

6. A system for interacting with virtual objects in a three-dimensional space by gestures, the system comprising a processing unit (110) provided with a processor (111) and a memory (112) for processing the virtual objects and displaying the virtual objects on a display unit (120) connected to the processing unit (110) in response to user's hand gestures and a user's head position received by a camera (130) for measuring depth and comprising an accelerometer (131) and connected to the processing unit (110) and directed to a scene in a real world, the scene comprising the head and hands of the user sitting at a desktop, whereby the processing unit (110) is configured to perform the steps of:

   - receiving, from the camera (130), a signal representing a series of depth maps in a form of bitmaps for an empty area, calculating an averaged depth map (ADM) and storing the averaged depth map (ADM) in the memory (112);
   - determining a location of an edge of the desktop (195) in the averaged depth map (ADM);
   - transforming the depth coordinates from a camera view to a coordinate system having a center in the previously determined average point of the edge of the desktop (195);
   - receiving a signal representing a current depth map (CDM) in a form of a bitmap;
   - calculating a differential depth map (DDM) representing differences between the current depth map (CDM) and the averaged depth map (ADM);
   - determining, in the differential depth map (DDM), a position of the user's head (191);
   - determining, in the differential depth map (DDM) a position of at least one user's hand (192), wherein:

      ◦ selecting (2101), in the differential depth map (DDM), in the vicinity of the desktop (195) a pixel closest to the camera eye and pixels separated (2102) therefrom by a predetermined threshold range, and storing the selected pixels as a selected depth map (SDM);
      ◦ determining (2105) a manipulating plane corresponding to the selected pixels;
      ◦ determining (2106) a size of inequalities, as an average distance of all said pixels from said manipulating plane (MP) located between the points of the selected depth map (SDM);
      ◦ determining a type of the gesture performed (2107) as a grab gesture, when said size of inequalities of the manipulating plane is higher than a predetermined upper threshold value of the gesture or as a gesture of a flat hand when said size of inequalities of the manipulating plane is lower than a predetermined lower threshold value of the gesture;

- and displaying on the display unit (120) a virtual object in a position determined by the current location of the user's head (191) and manipulating the virtual object in response to the gestures made by the user's hand (192).

## Patentansprüche

1. Verfahren zum Interagieren mit virtuellen Objekten in einem dreidimensionalen Raum mittels Gesten, wobei das Verfahren aufweist:

   - Generieren von virtuellen Objekten in einer Verarbeitungseinheit (110), die mit einem Prozessor (111) und einem Arbeitsspeicher (112) ausgestattet ist;
   - Anzeigen der virtuellen Objekte auf einer Anzeigeeinheit (120), die mit der Verarbeitungseinheit verbunden ist,
   - Verarbeiten des Abbilds der virtuellen Objekte in Reaktion auf Handgesten des Benutzers und einer Kopfposition des Benutzers, die von einer Kamera (130) zum Messen von Tiefe empfangen werden, und die einen Beschleunigungsmesser (131) aufweist und mit der Verarbeitungseinheit (110) verbunden und auf eine Szene in einer realen Welt ausgerichtet ist, wobei die Szene den Kopf und die Hände des Benutzers aufweist, der an einem Schreibtisch sitzt,
   - und Ausführen der folgenden Schritte in der Verarbeitungseinheit (110):
   - Empfangen eines Signals, das eine Reihe von Tiefenkarten in einem Bitmap-Format für einen leeren Bereich darstellt, von der Kamera (130), Berechnen einer gemittelten Tiefenkarte (ADM), und Speichern der gemittelten Tiefenkarte (ADM) in dem Arbeitsspeicher (112);
   - Bestimmen einer Position einer Kante des Schreibtischs (195) in der gemittelten Tiefenkarte (ADM);
   - Umwandeln der Tiefenkoordinaten aus einer Kamerasicht in ein Koordinatensystem mit einer Mitte in dem vorher bestimmten Punktmittelwert der Kante des Schreibtischs (195);
   - Empfangen eines Signals, das eine aktuelle Tiefenkarte (CDM) in einem Bitmap-Format darstellt;
   - Berechnen einer Differenzial-Tiefenkarte (DDM), die Unterschiede zwischen der aktuellen Tiefenkarte (CDM) und der gemittelten Tiefenkarte (ADM) darstellt;
   - Bestimmen einer Position des Kopfs des Benutzers (191) in der Differenzial-Tiefenkarte (DDM);
   - Bestimmen einer Position von mindestens einer Hand des Benutzers (192) in der Differenzial-Tiefenkarte (DDM), wobei:

      - ein Pixel in nächster Nähe zum Kameraauge und Pixel, die davon durch einen vorbestimmten Schwellenwertbereich getrennt sind (2102), in der Differenzial-Tiefenkarte (DDM) im näheren Umkreis des Schreibtischs (195) ausgewählt werden (2101), und die ausgewählten Pixel als eine ausgewählte Tiefenkarte (SDM) gespeichert werden;
      - eine Verarbeitungsebene, die den ausgewählten Pixeln entspricht, bestimmt wird (2105);
      - eine Größe von Ungleichheiten als eine durchschnittliche Entfernung aller Pixel von der Verarbeitungsebene (MP) bestimmt wird (2106), die sich zwischen den Punkten der ausgewählten Tiefenkarte (SDM) befindet;
      - ein Typ der Geste (2107) bestimmt wird, die als eine Greifgeste ausgeführt wird, wenn die Größe von Ungleichheiten der Verarbeitungsebene größer als ein vorbestimmter oberer Schwellenwert der Geste ist, oder als eine Geste einer flachen Hand, wenn die Größe der Ungleichheiten der Verarbeitungsebene kleiner als ein vorbestimmter unterer Schwellenwert der Geste ist;

   - und Anzeigen eines virtuellen Objekts in einer Position, die durch die aktuelle Position des Kopfs des Benutzers (191) bestimmt wird, auf der Anzeigeeinheit (120), und Verarbeiten des virtuellen Objekts in Reaktion auf die von der Hand des Benutzers (192) gemachten Gesten.

2. Verfahren nach Anspruch 1, **gekennzeichnet durch** Verarbeiten der gemittelten Tiefenkarte (ADM) in ein Format einer geglätteten gemittelten Tiefenkarte (SADM), indem daraus die Pixel entfernt werden, die eine Entfernung von der Kamera haben, die größer als ein vorbestimmter Wert eines Sichtbarkeits-Schwellenwerts ist, und Berechnen einer Differenzial-Tiefenkarte (DDM), die den Unterschied zwischen der aktuellen Tiefenkarte (CDM) und der gemittelten Tiefenkarte (ADM) darstellt.

3. Verfahren nach Anspruch 1, **gekennzeichnet durch** Aufrufen eines Befehls zum Verschieben eines virtuellen Objekts nach Bestimmen einer Greifgeste.

4. Verfahren nach Anspruch 1, **gekennzeichnet**

**durch** Aufrufen eines Befehls, um einen vorher ausgegebenen Befehl rückgängig zu machen, nachdem eine Geste mit der flachen Hand bestimmt worden ist.

5. Verfahren nach Anspruch 1, **gekennzeichnet durch** Ändern eines Blickpunkts auf die virtuellen Objekte, die auf der Anzeigeeinheit (120) angezeigt werden, nachdem eine Änderung der Position des Kopfs eines Benutzers erkannt worden ist.

6. System zum Interagieren mit virtuellen Objekten in einem dreidimensionalen Raum mittels Gesten, wobei das System eine Verarbeitungseinheit (110) aufweist, die mit einem Prozessor (111) und einem Arbeitsspeicher (112) ausgestattet ist zum Verarbeiten der virtuellen Objekte und Anzeigen der virtuellen Objekte auf einer Anzeigeeinheit (120), die mit der Verarbeitungseinheit (110) verbunden ist, in Reaktion auf Handgesten eines Benutzers und einer Kopfposition eines Benutzers, die von einer Kamera (130) zum Messen von Tiefe empfangen werden, und die einen Beschleunigungsmesser (131) aufweist und mit der Verarbeitungseinheit (110) verbunden und auf eine Szene in einer realen Welt ausgerichtet ist, wobei die Szene den Kopf und die Hände des Benutzers aufweist, der an einem Schreibtisch sitzt, wobei die Verarbeitungseinheit (110) konfiguriert ist, um die Schritte auszuführen zum:

- Empfangen eines Signals, das eine Reihe von Tiefenkarten in einem Bitmap-Format für einen leeren Bereich darstellt, von der Kamera (130), Berechnen einer gemittelten Tiefenkarte (ADM), und Speichern der gemittelten Tiefenkarte (ADM) in dem Arbeitsspeicher (112);
- Bestimmen einer Position einer Kante des Schreibtischs (195) in der gemittelten Tiefenkarte (ADM);
- Umwandeln der Tiefenkoordinaten aus einer Kamerasicht in ein Koordinatensystem mit einer Mitte in dem vorher bestimmten Punktmittelwert der Kante des Schreibtischs (195);
- Empfangen eines Signals, das eine aktuelle Tiefenkarte (CDM) in einem Bitmap-Format darstellt;
- Berechnen einer Differenzial-Tiefenkarte (DDM), die Unterschiede zwischen der aktuellen Tiefenkarte (CDM) und der gemittelten Tiefenkarte (ADM) darstellt;
- Bestimmen einer Position des Kopfs des Benutzers (191) in der Differenzial-Tiefenkarte (DDM);
- Bestimmen einer Position von mindestens einer Hand des Benutzers (192) in der Differenzial-Tiefenkarte (DDM), wobei:

- ein Pixel in nächster Nähe zum Kameraauge und Pixel, die davon durch einen vorbestimmten Schwellenwertbereich getrennt sind (2102), in der Differenzial-Tiefenkarte (DDM) im näheren Umkreis des Schreibtischs (195) ausgewählt werden (2101), und die ausgewählten Pixel als eine ausgewählte Tiefenkarte (SDM) gespeichert werden;
- eine Verarbeitungsebene, die den ausgewählten Pixeln entspricht, bestimmt wird (2105);
- eine Größe von Ungleichheiten als eine durchschnittliche Entfernung aller Pixel von der Verarbeitungsebene (MP) bestimmt wird (2106), die sich zwischen den Punkten der ausgewählten Tiefenkarte (SDM) befindet;
- ein Typ der Geste bestimmt wird, die als eine Greifgeste ausgeführt wird (2107), wenn die Größe von Ungleichheiten der Verarbeitungsebene größer als ein vorbestimmter oberer Schwellenwert der Geste ist, oder als eine Geste einer flachen Hand, wenn die Größe der Ungleichheiten der Verarbeitungsebene kleiner als ein vorbestimmter unterer Schwellenwert der Geste ist;

- und Anzeigen eines virtuellen Objekts in einer Position, die durch die aktuelle Position des Kopfs des Benutzers (191) bestimmt wird, auf der Anzeigeeinheit (120), und Verarbeiten des virtuellen Objekts in Reaktion auf die von der Hand des Benutzers (192) gemachten Gesten.

**Revendications**

1. Procédé d'interaction avec des objets virtuels dans un espace en trois dimensions par des gestes, le procédé comprenant:

- la génération d'objets virtuels dans une unité de traitement (110) dotée d'un processeur (111) et d'une mémoire (112);
- l'affichage des objets virtuels sur une unité d'affichage (120) connectée à l'unité de traitement,
- le traitement de l'image des objets virtuels en réponse à des gestes des mains de l'utilisateur et d'une position de tête de l'utilisateur reçus par une caméra (130) permettant de mesurer une profondeur et comprenant un accéléromètre (131) et connectée à l'unité de traitement (110) et dirigée vers une scène dans un monde réel, la scène comprenant la tête et les mains de l'utilisateur assis à un bureau,
- et l'exécution des étapes suivantes dans l'unité de traitement (110):

- la réception, en provenance de la caméra (130), d'un signal représentant une série de cartes de profondeur sous forme de tables de bits pour une zone vide, le calcul d'une carte de profondeur moyenne (ADM) et le stockage de la carte de profondeur moyenne (ADM) dans la mémoire (112);
- la détermination d'un emplacement d'un rebord du bureau (195) dans la carte de profondeur moyenne (ADM);
- la transformation des coordonnées de profondeur en provenance d'une vue de caméra dans un système de coordonnées ayant un centre sur le point moyen préalablement déterminé du rebord du bureau (195);
- la réception d'un signal représentant une carte de profondeur actuelle (CDM) sous forme d'une carte de bits;
- le calcul d'une carte de profondeur différentielle (DDM) représentant des différences entre la carte de profondeur actuelle (CDM) et la carte de profondeur moyenne (ADM);
- la détermination, dans la carte de profondeur différentielle (DDM), d'une position de la tête (191) de l'utilisateur;
- la détermination, dans la carte de profondeur différentielle (DDM), d'une position d'au moins une main (192) de l'utilisateur;

    - la sélection (2101), sur la carte de profondeur différentielle (DDM), dans le voisinage du bureau (195) d'un pixel le plus proche de l'oeil de la caméra et de pixels séparés (2102) de celui-ci par une plage seuil prédéterminée, et le stockage des pixels sélectionnés sous la forme d'une carte de profondeur sélectionnée (SDM);
    - la détermination (2105) d'un plan de manipulation correspondant aux pixels sélectionnés;
    - la détermination (2106) d'une taille d'inégalités, en tant que distance moyenne de tous lesdits pixels depuis ledit plan de manipulation (MP) situé entre les points de la carte de profondeur sélectionnée (SDM);
    - la détermination d'un type du geste (2107) effectué comme un geste de saisie, quand ladite taille d'inégalités du plan de manipulation est supérieure à une valeur seuil supérieure prédéterminée du geste ou comme un geste de plat de la main quand la taille d'inégalités du plan de manipulation est inférieure à une valeur seuil inférieure prédéterminée du geste;

    - et l'affichage sur l'unité d'affichage (120) d'un objet virtuel à un emplacement déterminé par la localisation actuelle de la tête (191) de l'utilisateur et la manipulation de l'objet virtuel en réponse aux gestes effectués par la main (192) de l'utilisateur.

**2.** Procédé selon la revendication 1, **caractérisé par** le traitement de la carte de profondeur moyenne (ADM) en une forme de carte de profondeur moyenne lissée (SADM) en retirant de celle-ci les pixels ayant une distance depuis la caméra qui est supérieure à une valeur prédéterminée d'un seuil de visibilité, et le calcul d'une carte de profondeur différentielle (DDM) représentant la différence entre la carte de profondeur actuelle (CDM) et la carte de profondeur moyenne (ADM).

**3.** Procédé selon la revendication 1, **caractérisé par** l'invocation d'une commande de déplacement d'un objet virtuel lors de la détermination d'un geste de saisie.

**4.** Procédé selon la revendication 1, **caractérisé par** l'invocation d'une commande d'annulation d'une commande préalablement émise lors de la détermination d'un geste du plat de la main.

**5.** Procédé selon la revendication 1, **caractérisé par** le changement d'un point de vue sur les objets virtuels affichés sur l'unité d'affichage (120) lors de la détection d'un changement de position de la tête de l'utilisateur.

**6.** Système d'interaction avec des objets virtuels dans un espace en trois dimensions par des gestes, le système comprenant une unité de traitement (110) dotée d'un processeur (111) et d'une mémoire (112) permettant le traitement des objets virtuels et l'affichage des objets virtuels sur une unité d'affichage (120) connectée à l'unité de traitement (110) en réponse à des gestes des mains de l'utilisateur et d'une position de la tête de l'utilisateur reçus par une caméra (130) permettant de mesurer une profondeur et comprenant un accéléromètre (131) et connectée à l'unité de traitement (110) et dirigée vers une scène dans un monde réel, la scène comprenant la tête et les mains de l'utilisateur assis à un bureau, moyennant quoi l'unité de traitement (110) est configurée pour exécuter les étapes de:

    - réception, en provenance de la caméra (130), d'un signal représentant une série de cartes de profondeur sous forme de tables de bits pour une zone vide, calcul d'une carte de profondeur moyenne (ADM) et stockage de la carte de profondeur moyenne (ADM) dans la mémoire (112);
    - détermination d'un emplacement d'un rebord du bureau (195) dans la carte de profondeur moyenne (ADM);

- la transformation des coordonnées de profondeur en provenance d'une vue de caméra dans un système de coordonnées ayant un centre sur le point moyen préalablement déterminé du rebord du bureau (195);
- réception d'un signal représentant une carte de profondeur actuelle (CDM) sous forme d'une carte de bits;
- calcul d'une carte de profondeur différentielle (DDM) représentant des différences entre la carte de profondeur actuelle (CDM) et la carte de profondeur moyenne (ADM);
- détermination, dans la carte de profondeur différentielle (DDM), d'une position de la tête (191) de l'utilisateur;
- détermination, dans la carte de profondeur différentielle (DDM), d'une position d'au moins une main (192) de l'utilisateur;

   - sélection (2101), sur la carte de profondeur différentielle (DDM), dans le voisinage du bureau (195) d'un pixel le plus proche de l'oeil de la caméra et de pixels séparés (2102) de celui-ci par une plage seuil prédéterminée, et le stockage des pixels sélectionnés sous la forme d'une carte de profondeur sélectionnée (SDM);

   - détermination (2105) d'un plan de manipulation correspondant aux pixels sélectionnés;

   - détermination (2106) d'une taille d'inégalités, en tant que distance moyenne de tous lesdits pixels depuis ledit plan de manipulation (MP) situé entre les points de la carte de profondeur sélectionnée (SDM);

   - détermination d'un type du geste effectué (2107) comme un geste de saisie, quand ladite taille d'inégalités du plan de manipulation est supérieure à une valeur seuil supérieure prédéterminée du geste ou comme un geste de plat de la main quand la taille d'inégalités du plan de manipulation est inférieure à une valeur seuil inférieure prédéterminée du geste;

- et affichage sur l'unité d'affichage (120) d'un objet virtuel à un emplacement déterminé par la localisation actuelle de la tête (191) de l'utilisateur et manipulation de l'objet virtuel en réponse aux gestes effectués par la main (192) de l'utilisateur.

Fig. 1

130

120

191
190
192
195

Fig. 2

Fig. 3

Fig. 4A                                    Fig. 4B

Fig. 4C

2061 — Change coordinates at depth map

2062 — Multiply by an inverse matrix IM

2063 — Divide by Z2

2064 — Multiply by a value of distance

2065 — Rotate vertices

2066 — Subtract table edge coordinates

Fig. 5

**2101** → Locate the nearest point

**2102** → Determine neighboring points

**2103** → Locate the other nearest point

**2104** → Determine neighboring points

**2105** → Determine manipulating plane

**2106** → Determine inequalities

**2107** → Determine gesture type

**2108** → Determine hand orientation

**2109** → Determine hand position

Fig. 6

Fig. 7A

Fig. 7B

Fig. 7C

Fig. 7D

Fig. 7E

Fig. 7F

**EP 3 059 663 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013293679 A1
- US 2012326995 A1
- WO 2014009561 A2
- US 2010034457 A1
- WO 2013025011 A1